# EUROPEAN PATENT APPLICATION

(11) **EP 4 424 531 A1**
(43) Date of publication of application: **04.09.2024**
(21) Application number: 24160232.5
(22) Date of filing: 28.02.2024
(51) Int. Cl.: B60G 7/00, B60B 25/00, B60D 1/62, B60K 7/00, B60K 11/02, B60K 1/00, B60R 16/03, B60R 16/08, B60T 5/00, B60T 17/04, B62D 35/02, B60G 3/20

(54) **MOTOR VEHICLE SUSPENSION WITH INTEGRATED DUCTS**

(30) Priority: 02.03.2023 IT 202300003756
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A suspension (7) for a motor vehicle (1) includes at least one internally hollow suspension arm (7), so as to define at least one inner cavity (60), and is characterized by comprising at least one duct (42, 43, 44, 45, 46, 47) extending along the inner cavity (60) between an input hole (50a) of the suspension arm (30) and an output hole (50b) of the suspension arm (30), the duct (42, 43, 44, 45, 46, 47) being designed to allow a fluid flow or an electric wiring (32) to go from the input hole (59a) to the output hole (50b) through the inner cavity (60).

## Description

### CROSS-REFERENCE TO RELATED APPLICATIONS

This patent application claims priority from Italian patent application no. 102023000003756 filed on March 2, 2023, the entire disclosure of which is incorporated herein by reference.

### TECHNICAL FIELD

The invention relates to a motor vehicle suspension and to a motor vehicle comprising the suspension.

### PRIOR ART

The automotive industry notoriously keeps updating itself in order to improve already existing models.

In particular, the aerodynamic efficiency of motor vehicles is a highly important issue for a reduction of energy consumptions, despite the high performances and downforces requested.

For example, the design of some already known motor vehicles deals with this issue by offering particularly tapered rear portions with the aim of providing free volumes to allow air to flow through said volumes.

Furthermore, in these motor vehicles, suspensions have a significant length along the pitch axis, i.e. an axis orthogonal to the travel direction.

In this particular context, or more in general, a further improvement of the aerodynamic efficiency of motor vehicles is needed.

The object of the invention is to fulfil the need discussed above, preferably in a simple and reliable fashion.

### DESCRIPTION OF THE INVENTION

Said object is reached by a motor vehicle suspension as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a perspective view of a motor vehicle comprising a suspension according to the invention,

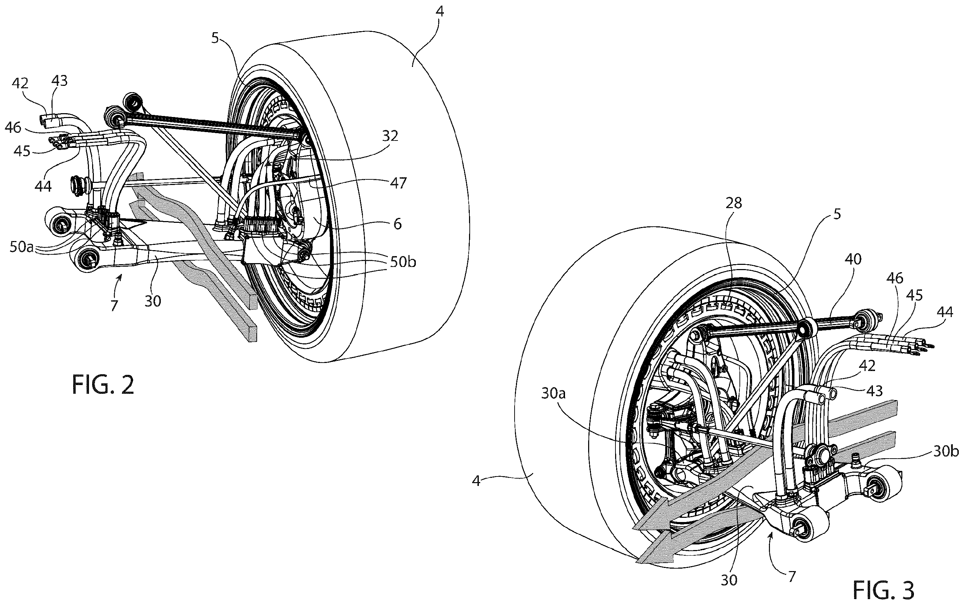

- figures 2, 3 are perspective views, according to different points of view and on a larger scale, of the suspension and of a wheel of the motor vehicle,

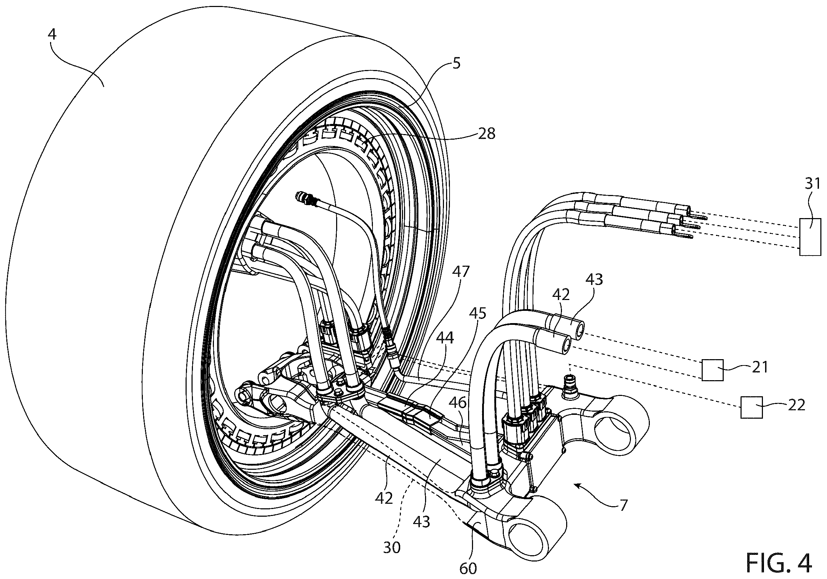

- figure 4 is a further perspective view, on a further larger scale and with parts removed for greater clarity, of the suspension and of the wheel of figures 2, 3,
- figure 5 is a cross section of the wheel according to a vertical plane including the axis of the wheel, and

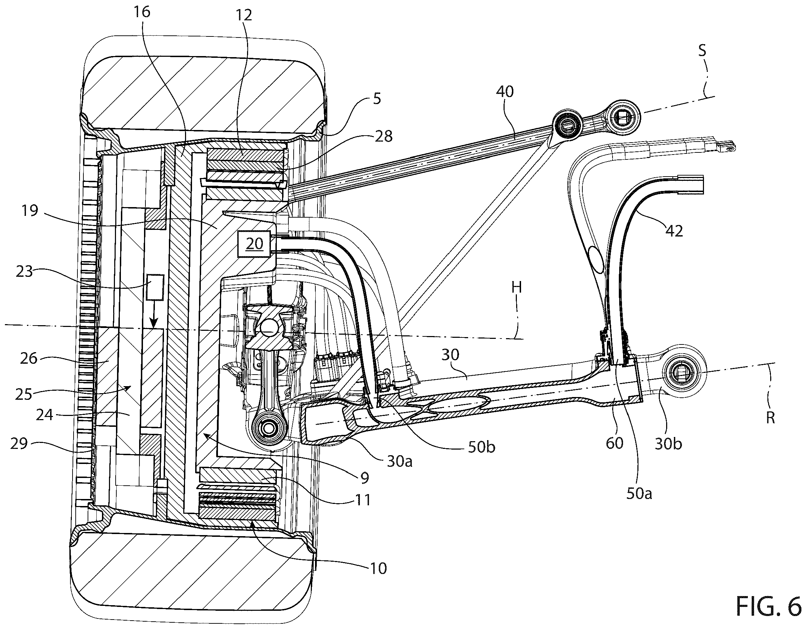

- figure 6 is a further cross section of the wheel according to a plane parallel to the plane of the cross section of figure 5.

### EMBODIMENTS OF THE INVENTION

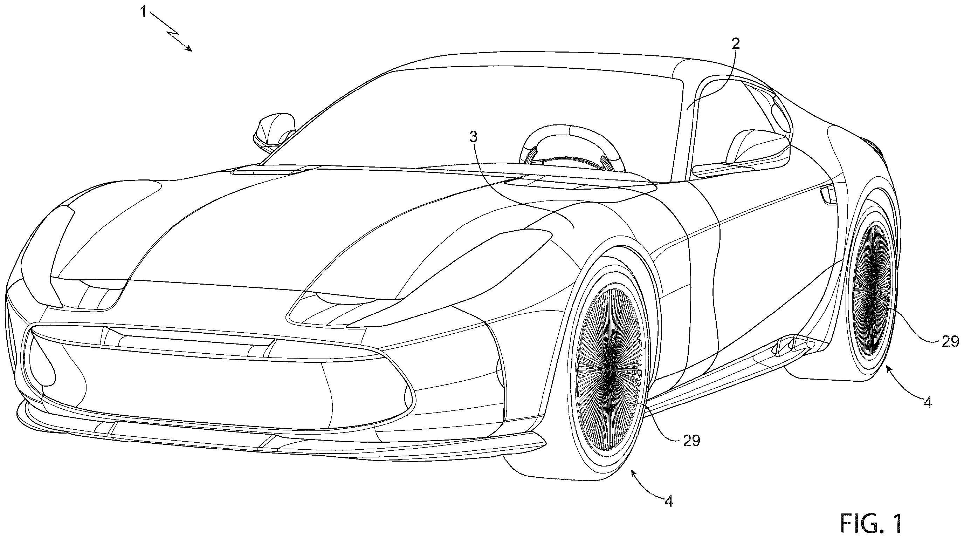

In figure 1, reference number 1 is used to indicate, as a whole, a motor vehicle.

The motor vehicle 1 comprises a body including, in turn, a frame 2 and a bodywork 3 carried by the frame 2 and defining the outer surfaces of the motor vehicle 1.

Furthermore, the motor vehicle 1 comprises a plurality of wheels or wheel devices 4, only two of them being shown in figure 1.

The wheels 4 are coupled to the body or, more precisely, to the frame 2.

The wheels 4 have similar features, for example except for the dimensions, which is why only one of the wheels 4 will be described more in detail below, provided that the features described for one of the wheels 4 also apply to the others.

The motor vehicle 1 comprises at least one suspension 7, which couples one of the wheels 4 to the frame 2.

The wheel 4 defines the unsprung mass of the motor vehicle 1.

Hence, the suspension 7 suspends the body or, more precisely, the frame 2 relative to the wheels 4, whereby the body is part of the sprung mass of the motor vehicle 1.

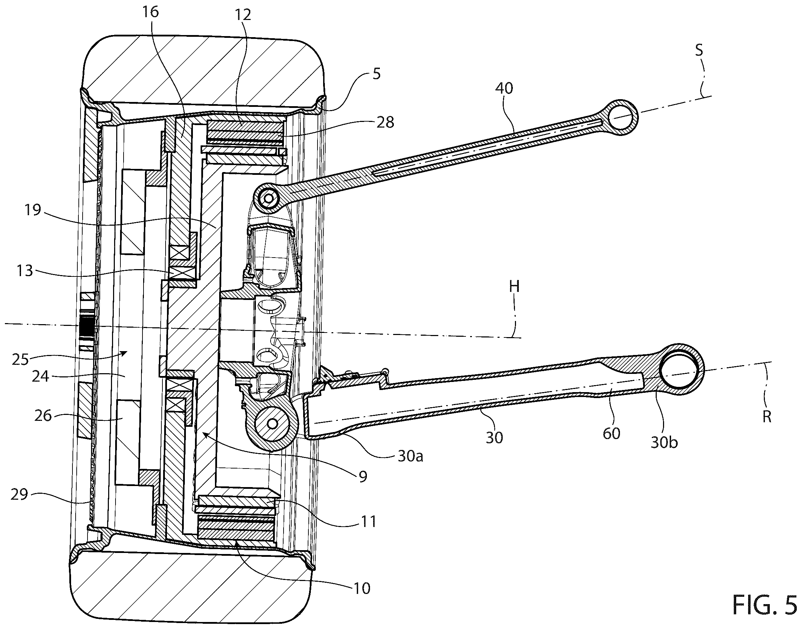

The wheel 4 comprises a rim 5 having, in particular, a tubular geometry. The rim 5 has an axis H (figure 5), around which the rim 5 extends, thus defining a solid of revolution.

The axis H is transversal relative to a travel direction of the motor vehicle 1.

The axis H defines a wheel axis, around which the wheel 4 can rotate.

Furthermore, the wheel 4 comprises a wheel hub unit 9 comprising, in turn, at least three coaxial elements arranged around the axis H and respectively defined by a radially inner element 19, a radially outer element 16 and a bearing 13 supporting the radially outer element 16 in a rotary manner around the axis H relative to the radially inner element 19.

The rim 5 is fixed relative to the radially outer element 16.

The radially inner element is carried, in a fixed position, by an upright 6 of the motor vehicle 1.

The suspension 7 couples the upright 6 to the frame 2, so that the frame 2 is suspended relative to the upright 6, which can be considered part of the wheel 4.

Furthermore, the wheel 4 preferably comprises an electric motor 10, in particular with a stator 11 that is fixed relative to the upright 6 and a rotor 12 that is fixed relative to the rim 5. In particular, the stator 11 and the rotor 12 are arranged within the rim 5, i.e. in the volume internally defined by the rim 5.

Practically, the motor 10 is integrated in the wheel 4, namely the wheel 4 or the assembly consisting of the motor 10 and of the wheel 4 defines an in-wheel motor.

More in particular, the stator 11 is carried by the element 19 in a fixed position, whereas the rotor 12 is fixed, for example directly, to the element 16.

The rotor 12 is configured to magnetically interact with the stator 11, which is what normally happens in the state of the art.

Indeed, the magnetic interaction between the rotor 12 and the stator 11 allows the rotor 12 to rotate relative to the stator 11 around the axis H, thus causing the wheel 4 or, more precisely, the rim 5 to rotate relative to the upright 6.

The motor 10 or, more precisely, the stator 11 comprises electric windings 28 configured to generate a magnetic field in response to a flow of electric current through the windings 28.

In detail, the magnetic field interacts with the magnetic flow generated by permanent magnets of the rotor 12.

The magnetic interaction between the magnetic flow and the magnetic field triggers the relative rotation of the rotor 12 relative to the stator 11.

The electric windings 28 can be connected to a power source 31 of the motor vehicle 1, such as for example a battery, so as to be supplied with the electric current.

The supply of power causes the generation of the magnetic field.

To this aim, the motor vehicle 1 comprises an electric wiring 32 to supply power to the motor 10 or, more precisely, to the electric windings 28.

In particular, the electric wiring 32 electrically connects the power source 31 to the motor 10.

The motor 10 is a mere non-limiting example of an electric member of the wheel 4 that needs to be supplied with power through the electric wiring 32.

Alternatively or in addition, the electric wiring 32 could power a control unit or other types of electric members with various functions.

More in general, the electric member is, in turn, an example of a generic device of the wheel 4 that needs to the supplied with energy in order to operate.

Such a generic device could be supplied, for example, with a fluid or a fluid flow, namely it could be a hydraulic or pneumatic device or the like.

For example, the generic device could comprise a braking member controllable to brake the wheel 4, for example a friction braking member (i.e. configured to brake the wheel 4 through friction on the braking member), such as a brake disc or braking pads or brake shoes or the like or a case containing the preceding members of this list.

Like the motor 10, the generic device can heat up during the operation, so that a conditioning of the device becomes convenient.

Therefore, the wheel 4 preferably comprises a conditioning member 20 (schematically shown in a conceptual manner), for example a heat exchanger, in thermal contact with the generic device, in this specific case comprising the motor 10.

The conditioning member 20 permits the conditioning of the generic device or, more precisely, of the motor 10 through the exchange of heat with a fluid flow flowing through or supplied to the conditioning member 20.

Therefore, the motor vehicle 1 comprises a fluid processing apparatus 21 (schematically shown in a conceptual manner), for example a pump in case of a fluid in the liquid state, to supply the fluid flow to the conditioning member 20.

The fluid of the flow is, in particular, a cooling fluid to remove heat from the motor 10 or, more in general, from the device heating up during the operation.

Moreover, a further example of the generic device could comprise an actuator 23 (schematically shown in a conceptual manner), for example operable by means of a fluid flow.

In this case, the motor vehicle 1 would conveniently comprise a fluid processing apparatus 22 (schematically shown in a conceptual manner), for example a pump in case of a fluid in the liquid state, to supply the fluid flow to the actuator 23.

More in detail, the actuator 23 is configured to operate a braking device 25 of the motor vehicle 1 configured, in turn, to brake the wheel 4. Here, the actuator 23 operates the braking device 25 by means of the fluid flow, precisely the one generated by the apparatus 22.

The braking device 25 preferably comprises a brake disc or first friction member 24 carried by the rotor 12, in particular at the element 16, in a fixed position relative to the rotor 12.

Furthermore, the braking device 25 preferably comprises a brake caliper device or second friction member 26. The device or member 26 is configured to cooperate in contact with the brake disc or member 24 in a selective manner.

The braking device 25 can be defined, for example, by the first and the second friction member 24, 26.

The second friction member 26 is operable to be brought into contact with the first friction member 24, so that a friction is generated between the first friction member 24 and the second friction member 26.

In other words, the device or member 26 is operable to grab the brake disc or member 24, thus exerting a braking action upon the rotor 12 through sliding friction, and to release the brake disc or member 24, thus ceasing to exert the braking action.

In particular, the actuator 23 is configured to operate the device 26 so as to selectively cause the cooperation between the device 26 and the brake disc 24.

Herein, in this specific case, the braking device 25 is for an emergency use or to create a parking brake or for a use as auxiliary braking device.

Indeed, the electric motor 10 can be used or controlled as a brake when it works as electric generator. As a matter of fact, the motor 10 is an electric machine suited to work as electrical energy generator.

The device 26 is carried by the upright 6 or by the element 19. In other words, the device 26 has at least one element that is fixed relative to the upright 6 or to the element 19.

Furthermore, the device 26 has at least one movable element carried or controlled by the actuator 23.

The wheel 4 conveniently comprises a wheel trim 29 fixed in front of the rim 5, for example through of a shape coupling or by means of threaded members.

The wheel trim 29 is fixed to the rim 5 in a releasable or removable manner, which means that the separation of the wheel trim 29 from the rim 5 can take place without causing damages to the wheel trim 29 or to the rim 5.

In other words, the wheel trim 29 is optional and removable.

The suspension 7 comprises at least one suspension arm 30, which is coupled to the frame 2 and to the upright 6 so as to suspend the frame 2 relative to the upright 6 or to the wheel 4.

In particular, the suspension 7 is an independent suspension.

More in particular, the suspension 7 has a multi-link layout.

Indeed, besides the arm 30, the suspension 7 optionally comprises a further arm 40.

The arms 30, 40 extend along respective axes R, S transversal to the travel direction of the motor vehicle 1 or coplanar to the axis H.

The arm 30 extends between two ends 30a, 30b opposite one another along the axis R. The ends 30a, 30b define respective hinge ends, hinged to the upright 6 and to the frame 2, respectively.

Specifically, the arm 30 has a triangular shape, as this shape is normally understood in the field of automotive suspensions. Therefore, the end 30b splits up into two branches respectively hinged to the frame 2 around a same hinge axis.

The same considerations substantially also apply to the optional arm 40, so as to form said multi-link layout, even though the arm 40 is conveniently shaped like a substantially cylindrical rod.

The multi-link layout 7 is a mere example, since the suspension 7 could have any layout, such as a MacPherson strut layout, a double wishbone layout, etc..

According to the invention, the suspension arm 30 is internally hollow, namely it has or defines one or more inner cavities 60.

The inner cavities 60 communicate with the outside of the suspension arm 30 through a plurality of holes made in the suspension arm 30.

The suspension 7 further comprises a plurality of ducts 42, 43, 44, 45, 46, 47 distinct from one another and extending along or inside said one or more cavities 60 and through the holes. Each one of the ducts 42, 43, 44, 45, 46, 47 has at least one extension component along the axis R, namely extends along the axis R.

More precisely, at least one, a set or each one of the ducts 42, 43, 44, 45, 46, 47 extend/s along at least one corresponding inner cavity 60 between an input hole 50a and an output hole 50b. The extension can clearly reach past the corresponding cavity 60 and the holes. I.e. at least one, a set or each one of the ducts 42, 43, 44, 45, 46, 47 can project out of the suspension arm 30.

For example, for greater clarity, the term duct can identify an opening or a tunnel between two holes or also the inner volume of a pipe going through the entire extension of the opening between the holes.

Each cavity 60 can coincide with the opening between the two holes or a cavity 60 can be meant as a volume inside the arm 30, where one or more ducts, meant as pipes, extend.

In particular, the input hole 50a is obtained at the end 30a, whereas the output hole 50b is obtained at the end 30b, respectively.

The number of ducts 42, 43, 44, 45, 46, 47 is a mere example; the suspension 7 could also comprise only one of the ducts 42, 43, 44, 45, 46, 47 or any sub-set thereof or a larger number of ducts.

The ducts 42, 43, 44 are designed to let through or let through wirings or electric cables.

The electric cables are part of the suspension 7.

Furthermore, the electric cables go through the respective holes 50a on one side, in particular at the end 30a, and the respective holes 50b on the other side, in particular at the end 30b, thus going through the inner cavity or cavities 60 of the arm 30.

The electric cables are connected to the electric motor 10 o, more in general, to an electric member of the wheel 4 in order to supply it with power.

In particular, the electric cables are also connected to the power source 31.

Furthermore, in particular, the electric cables are connected to the wirings 28.

The electric cables basically define or form part of the wiring 32.

The motor 10 is configured to cause the wheel 4 to rotate by means of the electric current supplied through the wiring 32.

The ducts 45, 46 are designed to let through or let through a fluid flow.

More specifically, the ducts 45, 46 are connected to the conditioning member 20 and, in particular, also to the apparatus 21.

The duct 45 preferably is a fluid flow delivery duct, whereby the conditioning member 20 is supplied with a fluid flow through the duct 45.

The apparatus 21 generates the fluid flow along the duct 45, thus supplying the conditioning member.

Therefore, in this case, the duct 46 is a fluid flow return duct from the conditioning member 20 to the apparatus 21. The fluid flow returns to the apparatus 21 through the duct 46 after the exchange of heat with the motor 10 or with the generic device heating up during the operation.

The duct 47 is designed to let through or let through a fluid flow, as well.

More specifically, the duct 47 is connected to the actuator 23, whereby the actuator 23 is supplied with the fluid flow through the duct 47.

Furthermore, the actuator 23 is operated through the fluid flow along the duct 47.

The duct 47 is also connected to the apparatus 22, so that the apparatus 22 generates the fluid flow along the duct 47, thus supplying the actuator 23.

Owing to the above, the advantages of the suspension 7 according to the invention are evident.

The electric cables and the fluid flows go through the suspension arm 30, whereby possible pipes on the outside of the arm 30 become completely unnecessary.

The absence of outer pipes has the great advantage that the aerodynamics of the motor vehicle 1 remain unaffected by the pipes, with an evident increase in aerodynamic efficiency.

Indeed, the typical problems caused by pipes are avoided in this case.

The increase in aerodynamic efficiency inevitably translates into a general improvement of the overall performances of the motor vehicle 1.

The inner cavities 60 do not constitute a structural problem for the suspension 7, whereby the reliability of the motor vehicle 1 is anyway ensured.

Finally, the suspension 7 according to the invention can clearly be subjected to changes and variants, which, though, do not go beyond the scope of protection defined by the appended claims.

In particular, each one of the details included in the figures is independent of the other details and is specifically designed to solve specific technical problems in isolation from the other details.

In particular, the mentioned details include each one of the arrangements of the various components shown relative to the other components.

More in particular, the shapes and the dimensions shown are mere examples and are not tightly linked to the arrangement of the components.

## Claims

1. A suspension (7) for a motor vehicle (1), the suspension (7) comprising at least one internally hollow suspension arm (7), so as to define at least one inner cavity (60), **characterized by** comprising at least one duct (42, 43, 44, 45, 46, 47) extending along the inner cavity (60) between an input hole (50a) of the suspension arm (30) and an output hole (50b) of the suspension arm (30), the duct (42, 43, 44, 45, 46, 47) being designed to allow a fluid flow or an electric wiring (32) to go from the input hole (59a) to the output hole (50b) through the inner cavity (60).

2. The suspension according to claim 1, wherein the suspension arm (30) extends along an axis (R) between two hinge ends (30a, 30b) opposite one another and configured to be hinged to an upright (6) and to a frame (2), respectively, of the motor vehicle (1).

3. The suspension according to claim 2, wherein the input hole and the output hole (50a, 50b) are obtained on said ends (30a, 30b), respectively, so that the duct (42, 43, 44, 45, 46, 47) extends along said axis (R).

4. A motor vehicle (1) comprising an upright (6), a wheel (4) carried by the upright (6) in a rotary manner around a wheel axis (H), a frame (2) and a suspension (7) according to any one of the preceding claims, wherein the suspension arm (30) is coupled to the frame (2) and to the upright (6) so as to suspend the frame (2), and wherein the wheel (4) comprises a device (10, 20, 23) connected to the duct (42, 43, 44, 45, 46, 47) so as to be supplied through the duct (42, 43, 44, 45, 46, 47), in particular with a fluid flow or with power through the electric wiring (32).

5. The motor vehicle according to claim 4, wherein the suspension arm (30) extends along an axis (R) transversal to a driving direction of the motor vehicle (1) or coplanar to the wheel axis (H) between two hinge ends (30a, 30b).

6. The motor vehicle according to claim 5, wherein the hinge ends (30a, 30b) are hinged to the upright (6) and to the frame (2), respectively.

7. The motor vehicle according to any one of the claims from 4 to 6, wherein said device (10, 20, 23) comprises an electric member (10), and wherein the motor vehicle (1) comprises the electric wiring (32) extending through the duct (44, 45, 46) from the input hole (50a) to the output hole (50b) and connected to the electric member (10) so as to supply the electric member (10) with power.

8. The motor vehicle according to claim 7, wherein the electric member (10) comprises an electric motor configured to cause the wheel (4) to rotate through the power supplied through the electric wiring (32).

9. The motor vehicle according to any one of the claims from 4 to 6, wherein said device (10, 20, 23) comprises a conditioning member (20), for example a heat exchanger, the wheel (4) further comprising a further device (10, 25) in thermal contact with the conditioning member (20) and comprising a fluid processing apparatus (21) configured to generate the fluid flow along the duct (42, 43), thus supplying the conditioning member (20), whereby the conditioning member (20) is configured to condition said further device (10, 25) through exchange of heat with the fluid flow.

10. The motor vehicle according to claim 9, wherein said further device (10, 25) comprises an electric motor (10) configured to cause the wheel (4) to rotate and/or a braking member (25) controllable to brake the wheel (4).

11. The motor vehicle according to any one of the claims from 4 to 6, wherein said device (10, 20, 23) comprises an actuator (23) operable through the fluid flow along the duct (47), and wherein the motor vehicle (1) comprises a fluid processing apparatus (22) configured to generate the fluid flow along the duct (47), thereby supplying the actuator (23) .

12. The motor vehicle according to claim 11, wherein the wheel (4) further comprises a braking device (25) configured to brake the wheel (4), the actuator (23) being configured to operate the braking device (25) through the fluid flow.
